# EUROPEAN PATENT SPECIFICATION

(11) **EP 3 920 006 B1**
(45) Date of publication and mention of the grant of the patent: **15.07.2026**
(21) Application number: 20214757.5
(22) Date of filing: 16.12.2020
(51) Int. Cl.: G06F 1/3218, G06F 1/3231, G06F 1/3234, G06F 3/14

(54) **GRANULAR POWER MANAGEMENT OF DISPLAY DEVICES BASED ON USER INTEREST**
GRANULARE LEISTUNGSVERWALTUNG VON ANZEIGEVORRICHTUNGEN BASIEREND AUF BENUTZERINTERESSE
GESTION DE LA PUISSANCE GRANULAIRE DE DISPOSITIFS D'AFFICHAGE BASÉE SUR L'INTÉRÊT DE L'UTILISATEUR

(30) Priority: 02.06.2020 US 202016890798
(43) Date of publication of application: 08.12.2021
(73) Proprietor: INTEL Corporation, Santa Clara, CA 95054 (US)
(72) Inventor: RAJAGOPAL, Pannerkumar, Bangalore KA 560035 (IN); PILLAI, Prakash, 560075 Bangalore (IN); PAWAR, Sagar, 560075 Bangalore (IN); TULJAPURKAR, Aneesh, Bangalore 560103 (IN); N, Raghavendra, Bengalore KA 56103 (IN); IYENGAR, Murali, Folsom CA 95630 (US); PIR, Ovais, 190023 Srinagar (IN)
(74) Representative: HGF

(56) References cited:
- EP-A1- 2 469 503
- US-A1- 2015 100 802
- US-A1- 2017 052 751

## Description

### BACKGROUND

### 1. Technical Field

This disclosure generally relates to the field of power management and more particularly, but not exclusively, to methods and apparatuses for controlling power consumption of displays.

### 2. Background Art

Display devices are a major source of power consumption in many computer systems. In multi-display systems, the challenges of resource utilization are not limited to efficient power use. Not only are power demands increased by the concurrent operation of multiple display devices, but additional processing resources are needed to generate image information that is to be variously provided to such display devices. Furthermore, interconnect bandwidth and input/output resources are needed to facilitate communication by display devices with hardware and/or executing software of a system host.

Successive generations of integrated circuit technology continue to improve the capability of smaller platforms to support the operation of multiple displays. As a result, there is expected to be increasing premium placed on solutions which improve resource utilization of such multi-display systems. In addition to market demand, regulations by international, federal and state agencies continue to impose stricter power consumption limitations for business and household electronic device.
Document EP 2469503A1 discloses a method for operating a computer device comprising a microprocessor, an operating system and a first and a second display screen.
Document US20150100802A1 discloses a system and method for selectively controlling display power consumption in a system with a first and second display.
Document US2017/052751A1 discloses a dual display information handling system, and more particularly relates to determining a position of an application window on a dual display information handling system having multiple dual screen orientations.

### SUMMARY

Embodiments of the invention are set out in the appended claims.

### BRIEF DESCRIPTION OF THE DRAWINGS

The various embodiments of the present invention are illustrated by way of example, and not by way of limitation, in the figures of the accompanying drawings and in which:
FIG. 1 illustrates a functional block diagram showing features of a system to determine a power state of a display device according to an embodiment.
FIG. 2 illustrates a flow diagram showing features of a method for operating a display device based on an indication of user interest according to an embodiment.
FIG. 3 illustrates a functional block diagram showing features of a system to manage power consumption by a display device according to an embodiment.
FIG. 4 illustrates a functional block diagram showing features of a display device to be operated with power management logic according to an embodiment.
FIG. 5 illustrates a timing diagram showing communications to operate a display device according to an embodiment.
FIGs. 6 and 7 illustrate state machine diagrams each showing respective power state transitions according to a corresponding embodiment.
FIG. 8 is a functional block diagram illustrating a computing device in accordance with one embodiment.
FIG. 9 is a functional block diagram illustrating an exemplary computer system, in accordance with one embodiment.

### DETAILED DESCRIPTION

In the following description, numerous details are discussed to provide a more thorough explanation of the embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the embodiments of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of" or "one or more of" can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

Embodiments discussed herein variously provide techniques and mechanisms for power management of display devices based on an indication that a user exhibits interest in one, but not all, of said display devices. The technologies described herein may be implemented in one or more electronic devices. Non-limiting examples of electronic devices that may utilize the technologies described herein include any kind of mobile device and/or stationary device, such as cameras, cell phones, computer terminals, desktop computers, electronic readers, facsimile machines, kiosks, laptop computers, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultra-mobile personal computers, wired telephones, combinations thereof, and the like. More generally, the technologies described herein may be employed in any of a variety of electronic devices including hardware and/or executing software to provide power management of a display device.

As used herein with reference to a display device, "dormant display," "dormant," "dormancy" and related terms variously relate to the characteristic of a display being of insufficient interest (if any) to a user of a system. Embodiments variously operate based on one or more predetermined criteria according to which a given display device is to be classified as being dormant (or, alternatively, "active" when user interest is deemed sufficient). In one such embodiment, one or more human interface devices sense the behavior of such a user - e.g., wherein the sensed behavior indicates a current level and/or type of user interest in a given display device.

Where it is determined that an insufficiency of user interest (if any) in one display device coincides with the user's interest in another display device, some embodiments reduce power consumption by the one display device while a current power state of the other display device remains unchanged. This functionality - i.e., to change power consumption by one display device while the power state of another display device is maintained - is variously referred to herein as providing power management at a "display-specific level of granularity." Some embodiments variously provide power management with such display-specific granularity during an operational mode (referred to herein as an "extended display" mode) whereby multiple display devices display different respective portions of the same graphical user interface (GUI).

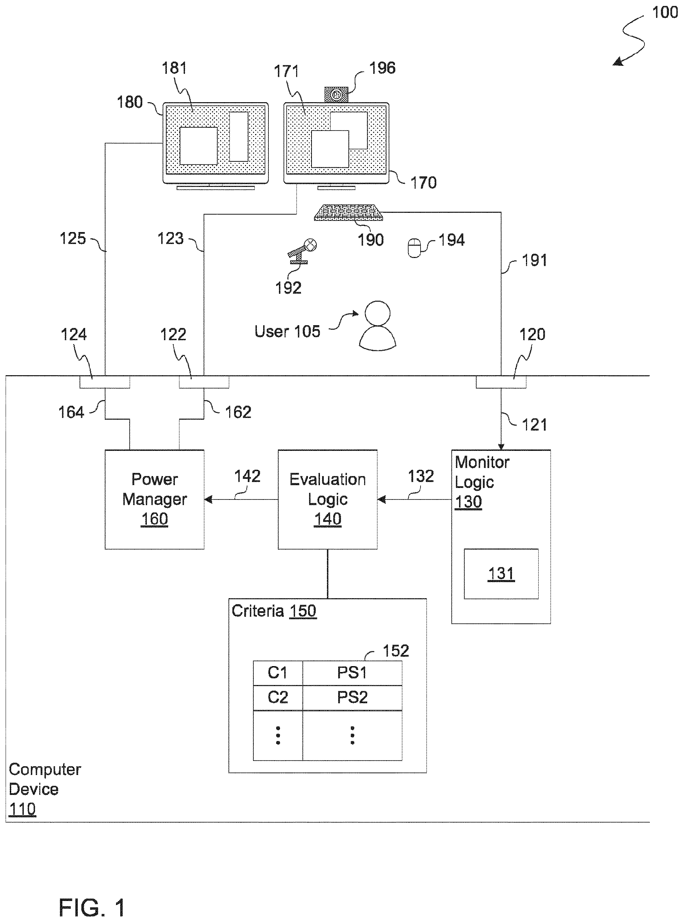

FIG. 1 shows features of a system 100 to determine a power state of a display device according to an embodiment. System 100 is one example of an embodiment wherein, based on an indication of user interest, hardware logic and/or software logic identifies a display device for which power consumption is to be reduced while a current power state of another display device persists.

As shown in FIG. 1, system 100 includes a computer device 110 that supports software functionality to provide an execution environment which facilitates interaction by a user with system 100. Computer device 110 is embodied as any type of device capable of performing the functions described herein. For example, computer device 110 is embodied as, without limitation, a smart phone, a tablet computer, a laptop computer, a notebook computer, a desktop computer, a consumer electronic device, a digital television device, and/or any other computing device configured to provide power management, at a granularity of an individual display device, based on a whether a user is exhibiting sufficient interest in a given display device. In various embodiments, computer device 110 is a system-on-chip (SoC) or other such IC chip.

System 100 comprises, facilitates coupling to, or otherwise supports operation of, two or more display devices (e.g., including the illustrative display devices 170, 180 shown). In one example embodiment, computer device 110 is a laptop computer, a tablet computer, or an all-in-one computer which further comprises one of display devices 170, 180. In another embodiment, computer device 110 is a desktop (or "tower") computer, and display devices 170, 180 are monitors which are to be coupled thereto. In an alternative embodiment, computer device 110 is a computer on a stick, a single board computer, or other such device that supports execution of an operating system - e.g., wherein display devices 170, 180 support coupling to computer device 110 in a daisy chain configuration.

Computer device 110 variously comprises, or is to be coupled to, one or more human interface devices (HIDs) which are to receive input from, or otherwise sense behavior of, a user 105 of system 100. In the illustrative embodiment shown, the one or more HIDs comprises some or all of, a keyboard 190, a mouse 194, an audio sensor 192, and an image sensor 196 (such as a video camera). Alternatively or in addition, one or more display devices function as HIDs to receive input from user 105 - e.g., where a given one of display devices 170, 180 comprise a touchscreen. System 100 includes more, fewer or different HIDs, in other embodiments. For example, other examples of HIDs to receive user input and/or to otherwise sense interest by user 105 in a particular one or more of display devices 170, 180 include, but are not limited to, a game controller, a gyroscope or other motion sensor, and the like. In some embodiments, the one or more HIDs additionally or alternatively include a speaker, a haptic feedback device, and/or any of various other devices (not shown) which are operable to provide an output to user 105. Some embodiments are not limited to a particular one or more HIDs by which user 105 interacts with computer device 110.

In some embodiments, computer device 110 further comprises a network interface (not shown) which facilitates communication between system 100 and a remote device via one or more wired networks and/or one or more wireless networks. Such a network interface is embodied, for example, as any of various communication circuits, devices, or collections thereof, which are suitable for enabling one or more communication technologies (e.g., wireless or wired communications) and associated protocols (e.g., Ethernet, WiFi^{®}, WiMAX, etc.) to effect such communication. In some embodiments, the network interface is embodied as a network interface card (NIC), or a network adapter such as a wireless network adapter.

Display devices 170, 180 are variously embodied, for example, each as any type of display capable of displaying digital information, such as a liquid crystal display (LCD), a light emitting diode (LED) display, a plasma display, a cathode ray tube (CRT), or other type of display device. In some embodiments, a given one of display devices 170, 180 provides a touch screen functionality that is embodied as any type of touch screen capable of generating input data in response to being touched by user 105 (and/or other such user of computer device 110). Such a touch screen uses any suitable touch screen input technology to detect tactile selection by user 105 of information displayed on the display device including, but not limited to, resistive touch screen sensors, capacitive touch screen sensors, camera-based touch screen sensors, surface acoustic wave (SAW) touch screen sensors, infrared touch screen sensors, optical imaging touch screen sensors, acoustic touch screen sensors, and/or other type of touch screen sensors. A touch screen of one of display devices 170, 180 is responsive to multiple simultaneous touch points, in some embodiments.

Audio sensor 192 illustrates any of various sensors capable of capturing audio signals such as a microphone, a line input jack, an analog-to-digital converter (ADC), or other type of audio sensor. In some embodiments, image sensor 196 is embodied as a digital camera or other digital imaging device coupled to (or alternatively, integrated with) computer device 110. The image sensor 196 includes an electronic image sensor, such as an active-pixel sensor (APS), e.g., a complementary metal-oxide-semiconductor (CMOS) sensor, or a charge-coupled device (CCD).

The one or more HIDs are variously coupled (wirelessly or via a wired connection) each to a respective interface of computer device 110 - e.g., wherein an interconnect 191 couples keyboard 190 to interface circuitry 120 of computer device 110. Computer device 110 is thus operable to receive via interface circuitry 120 an output of the one or more HIDs (e.g., the output including the illustrative signal 121 shown).

The execution environment is provided with a host operating system (OS) that, for example, is a Windows-based operating system, a Unix or Linux based operating system, a MacOS, or any other suitable operating system. In some embodiments, the host OS is of a type (such as iOS, Android, Windows Mobile, etc.) that is designed for operation on a handheld device.

The host OS is executed with a processor (not shown) of computer device 110, where said processor is embodied as any type of processor capable of facilitating interaction with user 105 via the one or more HIDs as described herein. For example, the processor is embodied as a single or multi-core processor(s), digital signal processor, microcontroller, or other processor or processing/controlling circuit. Execution of the host OS is further facilitated with a memory (not shown) which is coupled to the processor - e.g., where the memory is embodied as any type of volatile or non-volatile memory or data storage capable of performing the functions described herein. In operation, the memory stores various data and software used during operation of computer device 110 such as operating systems, applications, programs, libraries, and drivers. The memory is communicatively coupled to the processor via any of a variety of suitable components and/or subsystems including, but not limited to, one or more memory controller hubs, input/output control hubs, firmware devices, communication links (such as point-to-point links, bus links, wires, cables, light guides, printed circuit board traces, etc.), or the like.

In an embodiment, the execution environment (and/or one or more applications which run in the execution environment) operates some or all of the one or more HIDs to provide one or more user interfaces. In one example embodiment, a graphical user interface (GUI) is presented with one or both of display devices 170, 180 - e.g., wherein some or all of keyboard 190, mouse 194, audio sensor 192 and image sensor 196 facilitate a detection of whether and/or how user 105 interacts with, or is otherwise interested in, a given feature of said GUI (and, correspondingly, a given display device which displays that GUI feature). For example, keyboard 190 enables user 105 to interact with a given application by inputting typed characters which variously represent text, instructions and/or other information. Alternatively or in addition, mouse 194 enables user 105 to interact with said application by moving a cursor of the GUI and, for example, clicking on a particular window, window pane, menu item or other GUI feature. Alternatively or in addition, audio sensor 192 enables user 105 to provide voice commands to a virtual assistant process.

In some embodiments, the OS provides or otherwise operates based on an extended display configuration of display devices 170, 180, wherein a single GUI - e.g., including a desktop environment of the OS - extends to at least part of a display region 171 of display device 170 and also to at least part of a display region 181 of display device 180. The GUI comprises any of various GUI features (e.g., including one or more windows, icons, menus and/or the like) which, for example, user 105 is able to drag between display regions 171, 181 based on operation of the one or more HIDs. Alternatively or in addition, user interaction with a GUI feature in one of display regions 171, 181 can, for example, result in a change to an image displayed in the other of display regions 171, 181.

During operation of system 100, the execution environment participates in or otherwise supports communications with some or all of the one or more HIDs to detect behavior by (e.g., input provided by) user 105. At a given time, such behavior indicates user interest in (e.g., interaction with) a particular one of display regions 171, 181 - e.g., at a time when no such user interest in the other of display regions 171, 181 is indicated. Some embodiments facilitate efficient use of power and/or other resources by selectively reducing power consumption by one of display devices 170, 180 - while a power state of the other of display devices 170, 180 is to be maintained -based on an indication of user interest in one, and only one, of display devices 170, 180.

In the embodiment shown, monitor logic 130 of computer device 110 comprises hardware and/or executing software which directly or indirectly monitor interactions by user 105 with the one or more HIDs. For example, monitor logic 130 is coupled to receive information based on signal 121 (and/or other output from the one or more HIDs), where the information specifies or otherwise indicates a type and/or level of interest by user 105 in a particular one (or both) of display devices 170, 180.

In various embodiments, monitor logic 130 includes, has access to, or otherwise operates based on reference information 131 which specifies or otherwise indicates that a first portion of a GUI and a second portion of the GUI correspond (respectively) to the display regions 171, 181 which each display a different respective one of said portions. In one such embodiment, reference information 131 is provided by configuration state of the OS - e.g., where the configuration state identifies an extended display mode whereby a desktop environment and/or or other GUI feature extends across multiple display devices. Reference information 131 is provided, for example, using operations adapted from conventional techniques for configuring a multi-display GUI. Some embodiments are not limited with respect to a particular format of reference information 131, or a particular source from which, or mechanism by which, reference information 131 is made available to monitor logic 130.

In one example embodiment, signal 121 indicates one or more events including, but not limited to, a typed input being received with keyboard 190, movement of a cursor and/or selection of a GUI element with mouse 194, a voice command or other sound being detected with audio sensor 192, a touch event at a touchscreen of one of display devices 170, 180, or the like. In some embodiments, signal 121 additionally or alternatively communicates image processing information - e.g., generated with eye tracking logic, gesture recognition logic or the like - which indicates a movement by user 105 which provides input for, or otherwise represents interest in, a particular GUI feature in one of display regions 171, 181.

As various outputs are provided by the one or more HIDs, monitor logic 130 detects which particular portion(s) of a GUI, if any, is/are to be updated at a given time. Monitor logic 130 further determines, based on the reference information 131, which display device(s) - insofar as each such device displays a respective GUI portion which is to be updated - is/are to be classified as currently being the subject of interest by user 105. Based on such determining, monitor logic 130 generates a signal 132 which indicates that a given display device is currently a particular one of an active display or a dormant display.

In the example embodiment shown, signal 132 specifies or otherwise indicates, for each of display devices 170, 180, whether the display device in question is currently active or dormant. Signal 132 is received by evaluation logic 140 comprising hardware and/or executing software that, based on signal 132, determines a power state to be configured for a given display device. For example, evaluation logic 140 performs such determining based on whether or not (according to some predetermined criteria) there is sufficient user interest in one particular display device under consideration. At a given time, for example, signal 132 indicates to evaluation logic 140 that display device 170 is currently a dormant display while display device 180 is currently an active display. However, at a different time, signal 132 instead indicates that display devices 170, 180 are (respectively) an active display and a dormant display.

Based on signal 132, evaluation logic 140 determines whether a power state transition of one or more display devices is to be performed. For example, evaluation logic 140 includes, has access to, or otherwise operates based on reference information (or other configuration state such as the illustrative criteria 150 shown) which specifies or otherwise indicates a basis according to which a given display device is to be classified as being a particular one of a dormant display type or an active display type. Criteria 150 are implemented at least in part, for example, as a table 152 (or other suitable data structure), entries of which each associate a respective condition of computer device 110 with a corresponding one or more power states which are to be configured based on that condition. Criteria 150 is created, updated and/or otherwise provided, for example, by a user, manufacturer, administrator or other agent - e.g., wherein criteria 150 are determined using operations adapted from conventional techniques for defining power management rules.

For example, one entry of table 150 identifies a predetermined condition C1 as corresponding to a power state PS1 which is to be provided based on an instance of condition C1. Condition C1 includes, for example, the expiration of some threshold period of time since a most recent operation of a given display device - e.g., where the most recent operation is any operation which is based on some indication of user interest. In some embodiments, the most recent operation is one of only a subset of various types of operations that are based on user interest. Power state PS1 includes, for example, transitioning a dormant display device to a state of lower power consumption - e.g., where the respective current power states of one or more other display devices persist during and after the transition to power state PS1.

Similarly, another entry of table 152 identifies a predetermined condition C2 as corresponding to another power state PS2 which is to be provided where an instance of condition C2 has been detected. Condition C2 includes, for example, an operation of a given display device which is currently in a particular (e.g., low power) power state. In one such embodiment, power state PS2 includes transitioning a previously dormant display device - which is now active or is expected to become active - to a state of higher power consumption. In various embodiments, evaluation logic 140 facilitates power management with display-specific granularity based on more, fewer and/or different criteria for determining whether a given display device is currently dormant or currently active.

Based on signal 132 and criteria 150, evaluation logic 140 generates a signal 142 which specifies or otherwise indicates a power state transition that is to be provided for a particular display device. In an embodiment, evaluation logic 140 includes or otherwise has access to timer circuitry which facilitates the detection of a period of time since a most recent activity event at a given display device, where said activity event is indicated by signal 132. In response to the expiration of a threshold period of time since such activity, signal 142 communicates that a particular one of display devices 170, 180 is to be transitioned to a state of lower power consumption.

In an embodiment, a power manager 160 of computer device 110 is coupled to receive signal 142, wherein power manager 160 comprises hardware and/or executing software logic to determine an operation of one or both of display devices 170, 180. For example, computer device 110 comprises interfaces 122, 124 (for example, respective display ports) which facilitate coupling to display devices 170, 180 - e.g., via respective connections 123, 125. In response to signal 142, power manager 160 generates one or more control signals to reduce a power consumption of one of display devices 170, 180. For example, a signal 162 is provided by power manager 160 to change display device 170 to a relatively low power state while display device 180 is maintained in a respective current power state. Alternatively or in addition, a signal 164 is provided by power manager 160 - e.g., based on user interaction with only display region 171 at a different time - to change display device 180 to a relatively low power state while display device 170 is maintained in a respective current power state.

In some embodiments, reducing power consumption of one of display devices 170, 180 comprises power manager 160 changing a refresh rate, a level of backlighting, and/or any of various other operational parameters of a display panel. In one such embodiment, one or more such operational parameters are changed incrementally over time - while the power state of another display device persists - as a display device continues to remain of insufficient user interest over an extended period of time.

In various embodiments, the functionality of some or all of monitor logic 130, evaluation logic 140, and power manager 160 is implemented as one or more software processes which execute with a processor and memory of computer device 110. Alternatively, such functionality is implemented by dedicated circuitry including, for example, a controller unit to implement monitor logic 130 and/or evaluation logic 140, and a power management unit (PMU) to implement power manager 160.

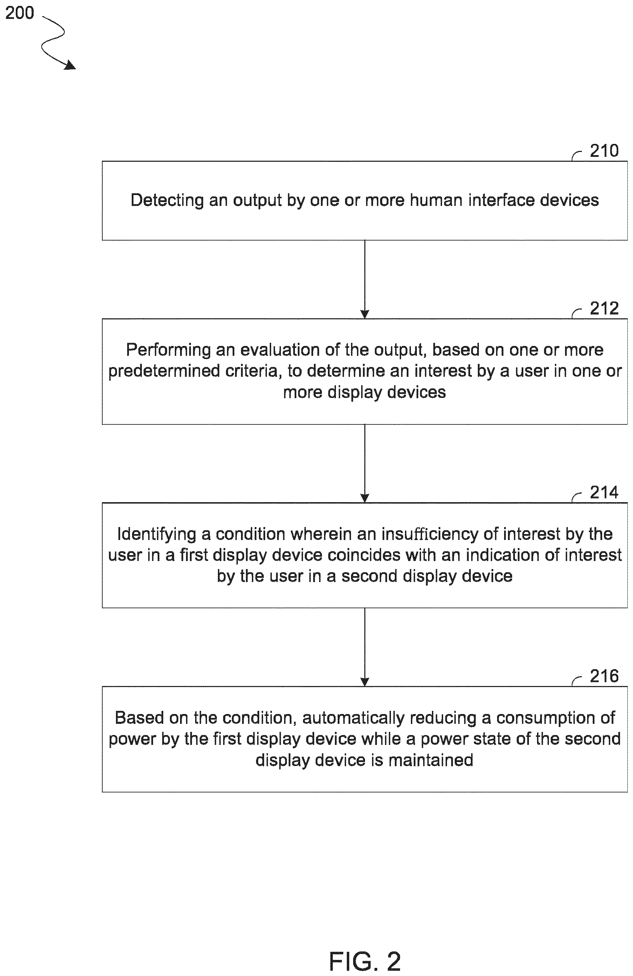

FIG. 2 shows features of a method 200 for variously managing power consumption by display devices according to an embodiment. The method 200 illustrates one embodiment wherein one display device is transitioned from a state of relatively high power consumption to a lower state of power consumption, where the transition is based on an indication that user interest in the display device is insufficient, according to a predetermined criteria. In an embodiment, the respective current power state(s) of one or more other display devices persist while power consumption of at least one display device is reduced in response to the condition. Some or all of method 200 is performed with a computer device which provides or otherwise supports functionality of system 100, for example.

As shown in FIG. 2, method 200 comprises (at 210) detecting an output by one or more human interface devices, wherein the output is communicated while multiple display devices - including a first display device and a second display device - each display a respective image each based on an execution of an operating system (OS). For example, the output is communicated while the OS supports an extended display mode wherein the multiple display devices each display a respective portion of a GUI (such as a desktop environment) that is provided by the OS.

By way of illustration and not limitation, the detecting at 210 includes or is otherwise based on monitor logic 130 receiving signal 121, for example. In an illustrative embodiment, the detecting is performed at a computer device (for example, one of a laptop computer, a tablet computer or an all-in-one computer) which comprises one of the first display device or the second display device, and further comprises a memory, processor and other such circuitry suitable to execute the OS. Alternatively, the detecting at 210 is performed by a desktop computer device which is coupled to the first display and the second display device via respective HDMI cables or other suitable interconnects.

Method 200 further comprises (at 212) performing an evaluation of the output based on one or more predetermined criteria which indicate a minimum threshold utilization of the first display device. In various embodiments, the criteria includes a threshold time duration - after which a given display device is to be considered dormant - since user behavior (sensed by one or more HIDs) has most recently indicated interest in the given display device. For example, such user behavior includes providing input via a HID to facilitate user interaction with the given display device. Alternatively or in addition, the behavior includes a user directing his/her gaze toward the given display device.

In some embodiments, a criteria includes a threshold time duration since a most recent instance of some change to one or more pixels of a given display device. Such criteria pertains, for example, to any pixel change(s) at the given display device or, alternatively, to only pixel changes which are of a particular one or more recognized types. By way of illustration and not limitation, one such criteria pertains to pixel changes other than any of an exempted type that (for example) is performed automatically - e.g., to display an email notification, an application update notification, a change to a displayed clock time, or the like. Such exempted types of pixel changes are predetermined, for example, according to one or more user-defined power management rules, in some embodiments.

Method 200 further comprises (at 214) identifying a condition - e.g., based on a result of the evaluation performed at 212 - wherein an insufficiency of interest by a user in the first display device coincides with an indication of interest by the user in the second display device. In one such embodiment, the identifying at 214 comprises determining that a threshold period of time has expired since a most recent change to one or more pixels of the first display device (or, for example, since the user directed his/her gaze at the first display device).

Based on the condition which is identified at 214, method 200 further performs (at 216) an automatic reducing of power consumption by the first display device. For example, the automatic reducing at 216 comprises decreasing a rate of refreshes performed by the first display device. Alternatively or in addition, the automatic reducing comprises stopping or otherwise decreasing a level of backlighting with a display panel of the first display device. The reducing at 216 is performed while a power state of the second display device is maintained - e.g., wherein said power state is to persist from a time before the reducing, during the reducing, and for at least some time after the reducing has completed. For example, the first display device and the second display device, only the first display device is subjected to a respective power state transition based on the condition detected at 214. For example, the second display device remains in a same power state as the user continues to interact with one or more GUI features which are displayed with the second display device.

In some embodiments, method 200 further comprises suspending the performance of one or more types of operations based on the condition which is identified at 214 (e.g., where such performance would otherwise be performed but for the condition). In one such embodiment, method 200 suspends operations - performed with a CPU, a GPU and/or other suitable processor logic - which are to calculate image data that would otherwise be communicated to the first display device to facilitate the display of a portion of a GUI. In addition, method 200 suspends a communication of updates - e.g., between two or more of the first display device, a GPU and a CPU - which would otherwise indicate to the OS a status of the first display device.

In some embodiments, method 200 further performs one or more additional reductions in power consumption of the first display device - e.g., where such one or more additional reductions take place while the second display device remains in the same current power state that supports interaction by the user. In one such embodiment, after reducing the consumption of power at 216, method 200 further detects that a duration of the condition which is identified at 214 has exceeded some threshold period of time. Based on such detecting, method 200 further reduces a refresh rate, decreases a level of backlight illumination and/or otherwise transitions the first display device to an even lower power state.

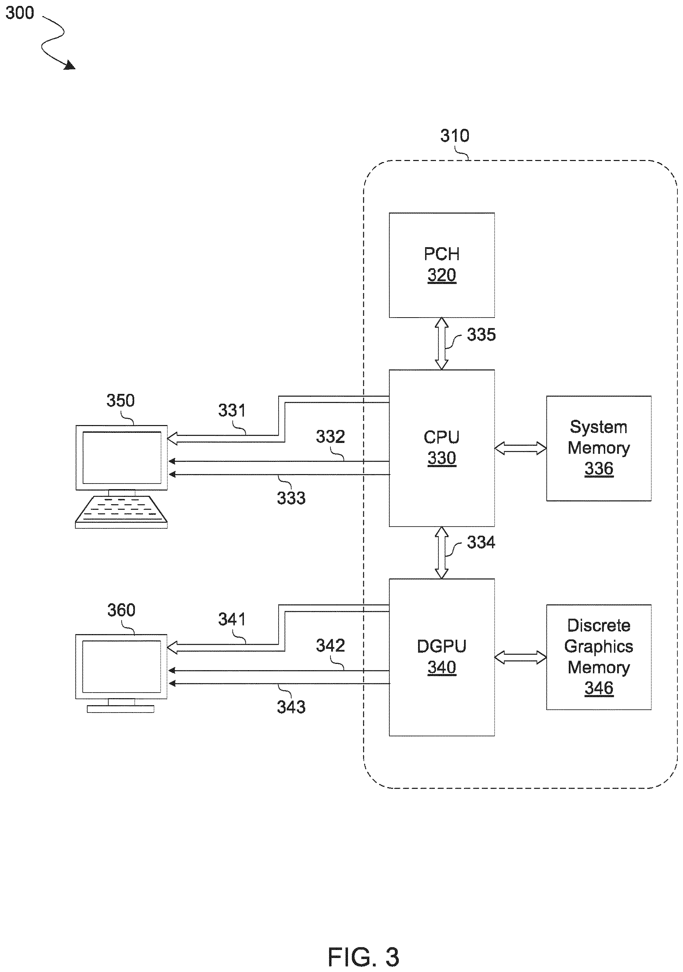

FIG. 3 shows features of a system 300 to configure operation of one or more display devices according to an embodiment. The system 300 illustrates one embodiment wherein a discrete graphics processor (DGPU) facilitates operation with an operating system to provide power management at a display-specific level of granularity. In various embodiments, system 300 includes some or all of the features of system 100 and/or provides functionality to perform operations of method 200, for example.

As shown in FIG. 3, system 300 comprises circuitry 310 and display devices 350, 360 variously coupled thereto. Circuitry 310, display device 350, and display device 360 correspond functionally to computer device 110, display device 170, and display device 180 (respectively), for example. In one such embodiment, a computer device comprises circuitry 310 and display device 350, wherein display device 360 is to be coupled to said computer device via an HDMI cable or other suitable interconnect. In other embodiments, a desktop computer comprises circuitry 310, and display devices 350, 360 are monitors which are each to be coupled to said desktop computer.

Circuitry 310 comprises a central processing unit (CPU) 330 and a discrete graphics processing unit (DGPU) 340 which is coupled thereto - e.g. via the illustrative Peripheral Component Interconnect Express (PCIe) interconnect 334 shown. DGPU 340 comprises circuit logic which provides processing functionality dedicated to generating video data to be provided to one or more display devices. A discrete graphics memory 346 of circuitry 310 is coupled to store state of one or more processes that are executed with DGPU 340.

CPU 330 includes any of various single-core processors and/or multi-core processors which are suitable to execute an operating system. In the example embodiment shown, state of the executing OS is stored at a system memory 336 of circuitry 310. Based on such execution, a user interface (UI) is made available to facilitate interaction with a user (not shown) of system 300 - e.g., wherein display devices 350, 360 support an extended mode operations by displaying different respective portions of a GUI. By way of illustration and not limitation, system 300 further includes one or more HIDs (not shown) which, for example, are coupled to CPU 330 via a platform controller hub PCH 320 and a Direct Media Interface (DMI) interconnect 335 (or other suitable circuitry). The one or more HIDs are operable to receive input by, or otherwise sense behavior of, the user.

CPU 330 and DGPU 340 are variously coupled to facilitate automatic power management - at a display-specific level of granularity - based on an insufficiency of user interest in one display device which coincides with an indication of user interest in another display device. For example, such power management includes or is otherwise based on an OS - and/or other suitable software executed at CPU 330 - configuring a power state of display device 350 with some or all of (High-Definition Multimedia Interface) HDMI data lines 331, Display Data Channel (DDC) serial data line 332, and HDMI data lines 331. Similarly, DGPU 340 is coupled to facilitate power management of display device 360 - e.g. wherein one or more processes executed at DGPU 340 configure a power state of display device 360 with some or all of HDMI data lines 341, DDC serial data line 342, and DDC serial clock line 343.

In one illustrative embodiment, execution of an OS and/or other suitable software at CPU 330 provides functionality of one or both of monitor logic 130 and evaluation logic 140 - e.g. wherein reference information 131 and/or criteria 150 are accessed at system memory 336. Alternatively or in addition, functionality of power manager 160 is provided by software which is executed at one of CPU 330 or DGPU 340. In still other embodiments, a dedicated ASIC or other suitable circuitry (outside of CPU 330 and DGPU 340) is coupled to provide functionality of monitor logic 130, evaluation logic 140, and/or power manager 160.

For example, such circuitry is coupled to snoop or otherwise detect communications - e.g. via DMI interconnect 335 and/or PCIe interconnect 334 - and based on such communication, to identify a display device as being in a particular one of a dormant state or an active state. Based on such detecting, the circuitry provides control signaling to change one or more parameters (a refresh rate, a backlight level, or the like) of a given display device. In an illustrative embodiment, DDC serial data line 332 and DDC serial clock line 333 (or alternatively, DDC serial data line 342 and DDC serial clock line 343) facilitate a communication of information - e.g., according to an Extended Display Identification Data (EDID) protocol or other suitable specification - to selectively configure (e.g., reconfigure) a refresh rate or a backlight level of a given display device.

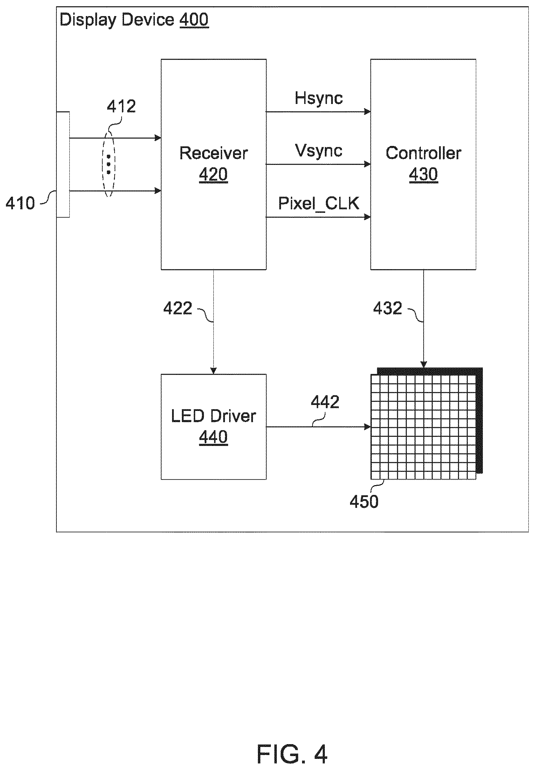

FIG. 4 shows features of a display device 400 to operate based on power management functionality according to an embodiment. For example, a power state of display device 400 is to be determined according to method 200 - e.g., wherein display device 400 includes some or all of the features of one of display devices 170, 180, 350, 360.

As shown in FIG. 4, display device 400 comprises a display panel 450 which (for example) includes a pixel array and a backlight layer including one or more light sources to illuminate pixels of the pixel array. Display device 400 further comprises circuitry to facilitate operation of display panel 450 - e.g., wherein such circuitry comprises the illustrative receiver 420, controller 430, and LED driver 440 shown. In an embodiment, interface circuitry 410 facilitates coupling of display device 400 to a host (not shown) such as one provided by computer device 110 or circuitry 310, for example.

Receiver 420 is configured to receive, via interface circuitry 410, signals 412 which are communicated to display device 400 by such a host. Signals 412 include, for example, image data, one or more clock signals and/or any of various additional information to control operation of display panel 450. Circuitry of receiver 420 operates to variously direct, format, and/or otherwise process signals 412 to facilitate the displaying of an image with display panel 450. By way of illustration and not limitation, receiver 420 provides to controller 430 one or more signals - e.g., including some or all of a horizontal synchronization signal Hsync, a vertical synchronization signal Vsync, and a clock signal Pixel_CLOCK - which facilitate refreshes by the pixel array at display panel 450. Based on such one or more signals, controller 430 communicates to a pixel array of display panel 450 one or more signals (for example, with the illustrative signal 432 shown) to decrease or otherwise change rate at which pixels are to be refreshed.

Alternatively or in addition, receiver 420 provides to LED driver 440 one or more signals - such as the illustrative signal 422 shown - which specify or otherwise indicate a level of backlighting (if any) to be provided to illuminate some or all of the pixel array. LED driver 440 converts, reformats or otherwise adapts signal 422 to generate a signal 442 that variously drives the light emitting diodes (or other suitable light sources) of the backlight layer at display panel 450.

In various embodiments, interface circuitry 410 facilitates coupling of display device 400 for operation as one of multiple display devices of a system. For example, the multiple display devices support an extended display mode whereby a GUI of an OS or other software process spans the multiple display devices. At some point during operation of said system, a level of power consumption by display device 400 is reduced in response to signals 412 - e.g., wherein display device 400 transitions to a lower power state while the system maintains the current power state of another of the multiple display devices. Alternatively or in addition, another of the multiple display devices is transitioned to a lower power state while signals 412 maintain a current power state of display device 400.

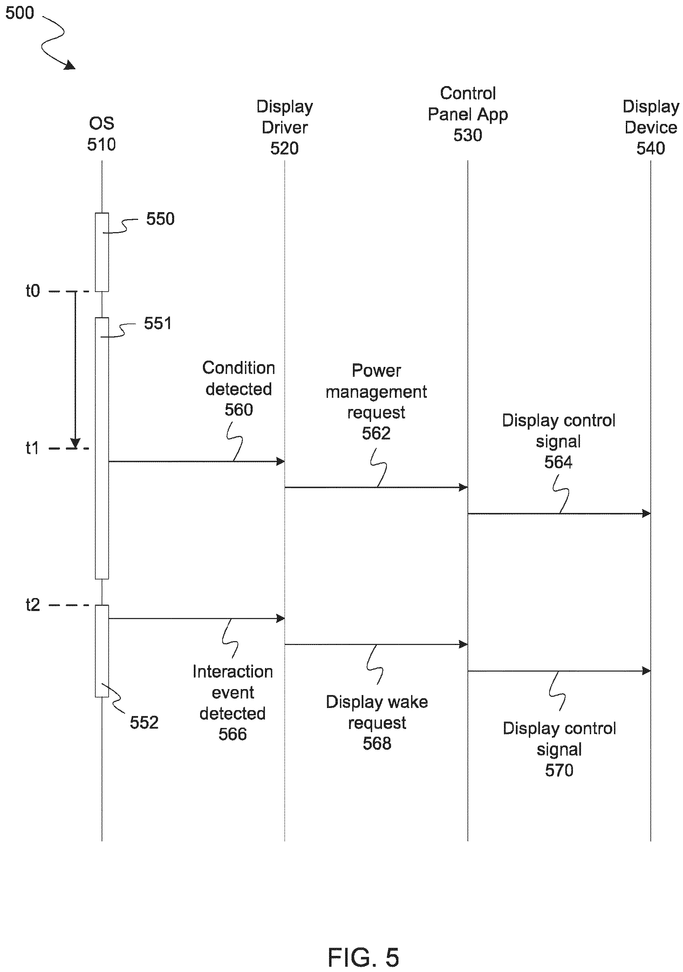

FIG. 5 shows a timing diagram 500 illustrating communications which are provided to configure a power state of a display device according to an embodiment. Communications such as those shown in timing diagrams 500, 550 are provided, for example, with one of display devices 160, 170, 350, 360 and/or according to method 200, for example.

In FIG. 5, timing diagram 500 shows communications between an operating system OS 510, a display driver 520, a control panel application 530, and a display device 540. Timing diagram 500 illustrates one scenario of communications which take place based on interactions between a computer system - e.g., one of systems 100, 300 - and a user thereof, wherein the system comprises a display device 540 and one or more other display devices. In various embodiments, multiple display devices of the system (including display device 540) support an extended display mode by displaying different respective portions of a GUI based on an execution of OS 510. In one such embodiment, display driver 520 executes in a kernel space of OS 510 - e.g., wherein control panel application 530 and/or other software execute in a user space of OS 510.

In an illustrative scenario according to one embodiment, operations 550, by a user space of OS 510, are performed based on a user exhibiting interest in display device 540. For example, operations 550 include calculations, by a CPU, to determine image data as the user variously interacts with one or more HIDs to move a cursor, type text, and/or otherwise interact with one or more GUI features that are displayed with display device 540. Such image data is provided to variously update pixels of display device 540.

Operations 550 continue until a time t0 when the one or more HIDs sense that the user has stopped exhibiting interest in display device 540. For example, at time t0 the user moves a mouse or other GUI feature from display device 540 to a second display device of the system, resulting in an at least temporary suspension of changes to pixel color values of display device 540. In the example sequence shown, the user transitions from exhibiting interest in display device 540 to exhibiting interest in a second display device, resulting in operations 551 by OS 510. For example, operations 551 include calculations, by the CPU, to generate image data that is to be provided to the second display device.

Some embodiments variously perform monitoring (with functionality such as that of monitor logic 130 and/or evaluation logic 140, for example) to detect a dormancy of display device 540 based on an expiration of some predetermined threshold time duration after time t0. For example, OS 510 (or other suitable software logic) detects - at a time t1 - that a threshold period of time has expired since the most recent time t0 when the user exhibited interest in display device 540. In response to detecting the expiration at time t1, OS 510 sends to display driver 520 a signal 560 which specifies or otherwise indicates a coincidence of user interest in another display device with an insufficiency (according to some predetermined criteria) of user interest in display device 540.

In response to signal 560, display driver 520 communicates to control panel application 530 a power management request 562 for a level of power consumption by display device 540 to be reduced. Responsive to power management request 562, control panel application 530 sends a signal 564 to change one or more operational characteristics of display device 540 - e.g., wherein signal 564 transitions display device 540 to a lower power state. In one such embodiment, the transitioning of display device 540 to a lower power state is performed while a current power state of one or more other display devices is maintained. For example, pixel refreshes and/or backlighting by display device 540 is/are automatically stopped or otherwise reduced to improve overall power efficiency of the system.

In the illustrative scenario shown, display device 540 is subsequently transitioned to a relatively high power state in response to a later indication that the user is again interested in display device 540. For example, at a time t2, OS 510 begins operations 552 based on the one or more HIDs indicating that the user is again providing input to interact with display device 540. Based on such input, a signal 566 from OS 510 indicates to display driver 520 that user interaction with display device 540 has resumed.

Responsive to signal 566, display driver 520 generates a display wake request 568 which is communicated to control panel application 530. Based on signal 568, control panel application 530 provides to display device 540 one or more display control signals 570 to resume or otherwise increase a refresh rate, a level of pixel back lighting and/or the like.

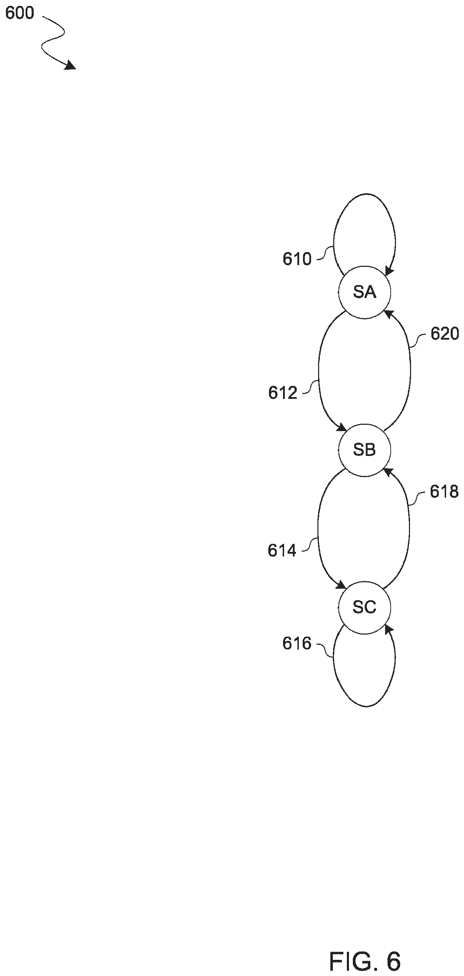

FIG. 6 shows features of a state machine 600 according to which operation of a display device is controlled based on user interest according to an embodiment. State machine 600 is provided, for example, with hardware logic and/or software logic of one of systems 100, 300 - e.g., wherein state machine 600 performs one or more operations of method 200.

As shown in FIG. 6, state machine 600 comprises various power states SA, SB, SC of a computer device which facilitates coupling to an external display device - e.g., wherein the computer device (which comprises a local display device) supports operation in an extended display mode, whereby the local display device and the external display device each display a respective portion of a GUI.

While the computer device is in power state SA, state machine 600 performs a loop 610 to maintain power state SA while no external display is plugged into the computer device. At some point during operation of the computer device, state machine 600 performs a transition 612 from power state SA to power state SB based on a determination that an external display has been plugged into the computer device. Transition 612 is performed based on any of various conventional hot plug or other techniques (which are not limiting on some embodiments) to detect the presence of a peripheral device.

In an embodiment, power state SB includes a relatively high power state of the external display device - e.g., to facilitate user interaction with GUI features which are to be displayed by the external display device. Subsequently, state machine 600 performs a transition 614 - from power state SB to a relatively low power state SC - based on a determination that, while the external display is plugged into the computer device, user interest in the external display device is insufficient, according to a predetermined criteria. For example, transition 614 occurs where a threshold period of time has passed since a most recent interaction by the user to changes one or more pixels of the external display device. Although some embodiments are not limited in this regard, power state SC places the external display device into a sleep mode - e.g., wherein pixel refreshes and backlight illumination are stopped entirely. In various embodiments, transition 614 takes place while a current power state of the computer's local display device is maintained.

State machine 600 then performs a loop 616 to remain in power state SC while the external display device continues to be considered dormant - i.e., of insufficient interest to the user. At some later point during operation of the computer device, state machine 600 performs a transition 618 from power state SC to power state SB based on a determination that the user has again provided some input (or otherwise exhibited some behavior) that indicates interest in the external display device. Subsequently, state machine 600 performs a transition 620 from power state SB to power state SA based on a determination that the external display has been unplugged from the computer device.

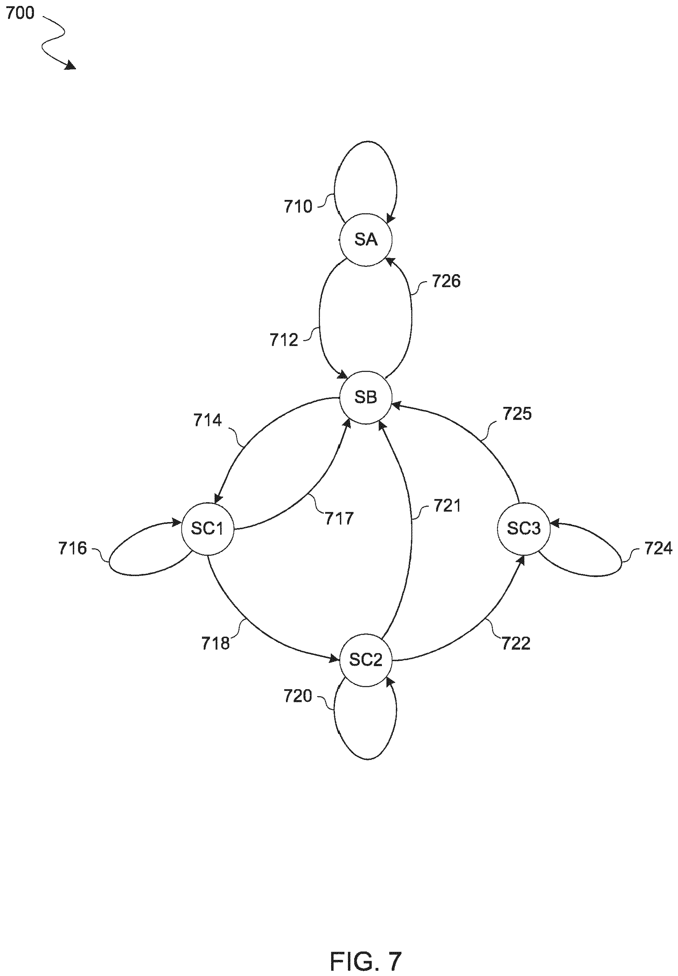

FIG. 7 shows features of a state machine 700 according to which operation of a display device is controlled based on user interest according to another embodiment. State machine 700 is provided, for example, at one of systems 100, 300 - e.g., wherein state machine 700 performs one or more operations of method 200.

As shown in FIG. 7, state machine 700 comprises various power states SA, SB, SC1, SC2, SC3 of a computer device which facilitates coupling to an external display device - e.g., wherein the computer device (which comprises a local display device) supports operation in an extended display mode. While the computer device is in power state SA, state machine 700 performs a loop 710 to maintain power state SA while no external display is plugged into the computer device. At some point during operation of the computer device, state machine 700 performs a transition 712 from power state SA to power state SB based on a determination that an external display has been plugged into the computer device. Transition 712 is performed based on any of various conventional hot plug or other techniques (which are not limiting on some embodiments) to detect the presence of a peripheral device.

In various embodiments, power state SB includes a relatively high power state of the external display device - e.g., to facilitate user interaction with GUI features which are to be displayed by the external display device. In one such embodiment, power states SC1, SC2, SC3 comprise successively lower power states of the external display device - e.g., wherein state machine 700 successively transitions the external display device through said power states during a period of time of continued dormancy of the external power display. For example, state machine 700 subsequently performs a transition 714 - from power state SB to a relatively low power state SC1 - based on a determination that, while the external display is plugged into the computer device, user interest in the external display device is insufficient, according to a predetermined criteria. Transition 714 occurs, for example, where a first threshold period of time has passed since a most recent interaction by the user to change one or more pixels of the external display device.

State machine 700 performs a loop 716 to remain in power state SC1 until user interaction with the external display results in a transition 717 back to power state SB, or until a continued dormancy of the external display results in a transition 718 to an even lower power state SC2. For example, transition 718 from power state SC1 to power state SC2 is performed in response to a determination that the previously detected dormancy of the external display device has continued to persist past the expiration of some second threshold period of time. In one such embodiment, power state SC1 (as compared to power state SB) comprises a relatively reduced refresh rate, and power state SC1 comprises both the reduced refresh rate and a relatively low level of backlighting at the external display device.

Subsequently, state machine 700 performs a loop 720 to remain in power state SC2 until user interaction with the external display results in a transition 721 back to power state SB, or until a continued dormancy of the external display results in yet another transition 722 to an even lower power state SC3. For example, transition 722 from power state SC2 to power state SC3 is performed in response to a determination that the continued dormancy of the external display device has persisted past the expiration of some third threshold period of time. In one example embodiment power state SC3 comprises a cessation of pixel refreshes and backlighting at the external display device.

State machine 700 then performs a loop 724 to remain in power state SC3 while the external display device continues to be considered dormant - i.e., of insufficient interest to the user. At some later point during operation of the computer device, state machine 700 performs a transition 725 from power state SC3 to power state SB based on a determination that the user has again provided some input (or otherwise exhibited some behavior) that indicates interest in the external display device. Subsequently, state machine 700 performs a transition 726 from power state SB to power state SA based on a determination that the external display has been unplugged from the computer device.

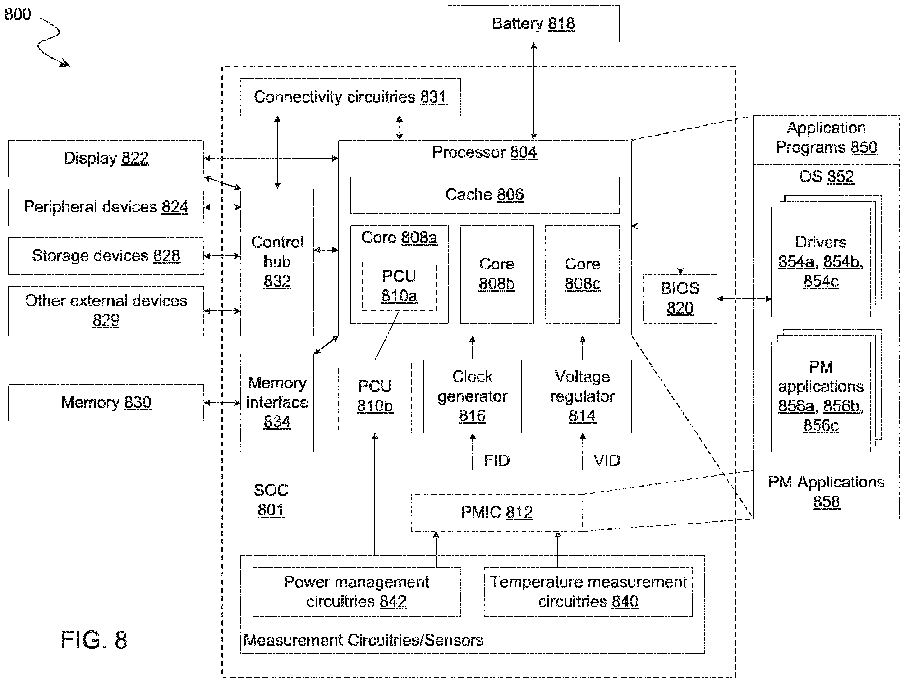

FIG. 8 illustrates a computer system or computing device 800 (also referred to as device 800) to provide granular power management of extended display devices in accordance with some embodiments. It is pointed out that those elements of FIG. 8 having the same reference numbers (or names) as the elements of any other figure can operate or function in any manner similar to that described, but are not limited to such.

In some embodiments, device 800 represents an appropriate computing device, such as a computing tablet, a mobile phone or smart-phone, a laptop, a desktop, an Internet-of-Things (IOT) device, a server, a wearable device, a set-top box, a wireless-enabled e-reader, or the like. It will be understood that certain components are shown generally, and not all components of such a device are shown in device 800.

In an example, the device 800 comprises a SoC (System-on-Chip) 801. An example boundary of the SOC 801 is illustrated using dotted lines in FIG. 8, with some example components being illustrated to be included within SOC 801 - however, SOC 801 may include any appropriate components of device 800.

In some embodiments, device 800 includes processor 804. Processor 2110 can include one or more physical devices, such as microprocessors, application processors, microcontrollers, programmable logic devices, processing cores, or other processing means. The processing operations performed by processor 804 include the execution of an operating platform or operating system on which applications and/or device functions are executed. The processing operations include operations related to I/O (input/output) with a human user or with other devices, operations related to power management, operations related to connecting computing device 800 to another device, and/or the like. The processing operations may also include operations related to audio I/O and/or display I/O.

In some embodiments, processor 804 includes multiple processing cores (also referred to as cores) 808a, 808b, 808c. Although merely three cores 808a, 808b, 808c are illustrated in FIG. 8, the processor 804 may include any other appropriate number of processing cores, e.g., tens, or even hundreds of processing cores. Processor cores 808a, 808b, 808c may be implemented on a single integrated circuit (IC) chip. Moreover, the chip may include one or more shared and/or private caches, buses or interconnections, graphics and/or memory controllers, or other components.

In some embodiments, processor 804 includes cache 806. In an example, sections of cache 806 may be dedicated to individual cores 808 (e.g., a first section of cache 806 dedicated to core 808a, a second section of cache 806 dedicated to core 808b, and so on). In an example, one or more sections of cache 806 may be shared among two or more of cores 808. Cache 806 may be split in different levels, e.g., level 1 (L1) cache, level 2 (L2) cache, level 3 (L3) cache, etc.

In some embodiments, processor core 804 may include a fetch unit to fetch instructions (including instructions with conditional branches) for execution by the core 804. The instructions may be fetched from any storage devices such as the memory 830. Processor core 804 may also include a decode unit to decode the fetched instruction. For example, the decode unit may decode the fetched instruction into a plurality of micro-operations. Processor core 804 may include a schedule unit to perform various operations associated with storing decoded instructions. For example, the schedule unit may hold data from the decode unit until the instructions are ready for dispatch, e.g., until all source values of a decoded instruction become available. In one embodiment, the schedule unit may schedule and/or issue (or dispatch) decoded instructions to an execution unit for execution.

The execution unit may execute the dispatched instructions after they are decoded (e.g., by the decode unit) and dispatched (e.g., by the schedule unit). In an embodiment, the execution unit may include more than one execution unit (such as an imaging computational unit, a graphics computational unit, a general-purpose computational unit, etc.). The execution unit may also perform various arithmetic operations such as addition, subtraction, multiplication, and/or division, and may include one or more an arithmetic logic units (ALUs). In an embodiment, a co-processor (not shown) may perform various arithmetic operations in conjunction with the execution unit.

Further, an execution unit may execute instructions out-of-order. Hence, processor core 804 may be an out-of-order processor core in one embodiment. Processor core 804 may also include a retirement unit. The retirement unit may retire executed instructions after they are committed. In an embodiment, retirement of the executed instructions may result in processor state being committed from the execution of the instructions, physical registers used by the instructions being de-allocated, etc. The processor core 804 may also include a bus unit to enable communication between components of the processor core 804 and other components via one or more buses. Processor core 804 may also include one or more registers to store data accessed by various components of the core 804 (such as values related to assigned app priorities and/or sub-system states (modes) association.

In some embodiments, device 800 comprises connectivity circuitries 831. For example, connectivity circuitries 831 includes hardware devices (e.g., wireless and/or wired connectors and communication hardware) and/or software components (e.g., drivers, protocol stacks), e.g., to enable device 800 to communicate with external devices. Device 800 may be separate from the external devices, such as other computing devices, wireless access points or base stations, etc.

In an example, connectivity circuitries 831 may include multiple different types of connectivity. To generalize, the connectivity circuitries 831 may include cellular connectivity circuitries, wireless connectivity circuitries, etc. Cellular connectivity circuitries of connectivity circuitries 831 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, 3rd Generation Partnership Project (3GPP) Universal Mobile Telecommunications Systems (UMTS) system or variations or derivatives, 3GPP Long-Term Evolution (LTE) system or variations or derivatives, 3GPP LTE-Advanced (LTE-A) system or variations or derivatives, Fifth Generation (5G) wireless system or variations or derivatives, 5G mobile networks system or variations or derivatives, 5G New Radio (NR) system or variations or derivatives, or other cellular service standards. Wireless connectivity circuitries (or wireless interface) of the connectivity circuitries 831 refers to wireless connectivity that is not cellular, and can include personal area networks (such as Bluetooth, Near Field, etc.), local area networks (such as Wi-Fi), and/or wide area networks (such as WiMax), and/or other wireless communication. In an example, connectivity circuitries 831 may include a network interface, such as a wired or wireless interface, e.g., so that a system embodiment may be incorporated into a wireless device, for example, cell phone or personal digital assistant.

In some embodiments, device 800 comprises control hub 832, which represents hardware devices and/or software components related to interaction with one or more I/O devices. For example, processor 804 may communicate with one or more of display 822, one or more peripheral devices 824, storage devices 828, one or more other external devices 829, etc., via control hub 832. Control hub 832 may be a chipset, a Platform Control Hub (PCH), and/or the like.

For example, control hub 832 illustrates one or more connection points for additional devices that connect to device 800, e.g., through which a user might interact with the system. For example, devices (e.g., devices 829) that can be attached to device 800 include microphone devices, speaker or stereo systems, audio devices, video systems or other display devices, keyboard or keypad devices, or other I/O devices for use with specific applications such as card readers or other devices.

As mentioned above, control hub 832 can interact with audio devices, display 822, etc. For example, input through a microphone or other audio device can provide input or commands for one or more applications or functions of device 800. Additionally, audio output can be provided instead of, or in addition to display output. In another example, if display 822 includes a touch screen, display 822 also acts as an input device, which can be at least partially managed by control hub 832. There can also be additional buttons or switches on computing device 800 to provide I/O functions managed by control hub 832. In one embodiment, control hub 832 manages devices such as accelerometers, cameras, light sensors or other environmental sensors, or other hardware that can be included in device 800. The input can be part of direct user interaction, as well as providing environmental input to the system to influence its operations (such as filtering for noise, adjusting displays for brightness detection, applying a flash for a camera, or other features).

In some embodiments, control hub 832 may couple to various devices using any appropriate communication protocol, e.g., PCIe (Peripheral Component Interconnect Express), USB (Universal Serial Bus), Thunderbolt, High Definition Multimedia Interface (HDMI), Firewire, etc.

In some embodiments, display 822 represents hardware (e.g., display devices) and software (e.g., drivers) components that provide a visual and/or tactile display for a user to interact with device 800. Display 822 may include a display interface, a display screen, and/or hardware device used to provide a display to a user. In some embodiments, display 822 includes a touch screen (or touch pad) device that provides both output and input to a user. In an example, display 822 may communicate directly with the processor 804. Display 822 can be one or more of an internal display device, as in a mobile electronic device or a laptop device or an external display device attached via a display interface (e.g., DisplayPort, etc.). In one embodiment display 822 can be a head mounted display (HMD) such as a stereoscopic display device for use in virtual reality (VR) applications or augmented reality (AR) applications.

In some embodiments and although not illustrated in the figure, in addition to (or instead of) processor 804, device 800 may include Graphics Processing Unit (GPU) comprising one or more graphics processing cores, which may control one or more aspects of displaying contents on display 822.

Control hub 832 (or platform controller hub) may include hardware interfaces and connectors, as well as software components (e.g., drivers, protocol stacks) to make peripheral connections, e.g., to peripheral devices 824.

It will be understood that device 800 could both be a peripheral device to other computing devices, as well as have peripheral devices connected to it. Device 800 may have a "docking" connector to connect to other computing devices for purposes such as managing (e.g., downloading and/or uploading, changing, synchronizing) content on device 800. Additionally, a docking connector can allow device 800 to connect to certain peripherals that allow computing device 800 to control content output, for example, to audiovisual or other systems.

In addition to a proprietary docking connector or other proprietary connection hardware, device 800 can make peripheral connections via common or standards-based connectors. Common types can include a Universal Serial Bus (USB) connector (which can include any of a number of different hardware interfaces), DisplayPort including MiniDisplayPort (MDP), High Definition Multimedia Interface (HDMI), Firewire, or other types.

In some embodiments, connectivity circuitries 831 may be coupled to control hub 832, e.g., in addition to, or instead of, being coupled directly to the processor 804. In some embodiments, display 822 may be coupled to control hub 832, e.g., in addition to, or instead of, being coupled directly to processor 804.

In some embodiments, device 800 comprises memory 830 coupled to processor 804 via memory interface 834. Memory 830 includes memory devices for storing information in device 800. Memory can include nonvolatile (state does not change if power to the memory device is interrupted) and/or volatile (state is indeterminate if power to the memory device is interrupted) memory devices. Memory device 830 can be a dynamic random access memory (DRAM) device, a static random access memory (SRAM) device, flash memory device, phase-change memory device, or some other memory device having suitable performance to serve as process memory. In one embodiment, memory 830 can operate as system memory for device 800, to store data and instructions for use when the one or more processors 804 executes an application or process. Memory 830 can store application data, user data, music, photos, documents, or other data, as well as system data (whether long-term or temporary) related to the execution of the applications and functions of device 800.

Elements of various embodiments and examples are also provided as a machine-readable medium (e.g., memory 830) for storing the computer-executable instructions (e.g., instructions to implement any other processes discussed herein). The machine-readable medium (e.g., memory 830) may include, but is not limited to, flash memory, optical disks, CD-ROMs, DVD ROMs, RAMs, EPROMs, EEPROMs, magnetic or optical cards, phase change memory (PCM), or other types of machine-readable media suitable for storing electronic or computer-executable instructions. For example, embodiments of the disclosure may be downloaded as a computer program (e.g., BIOS) which may be transferred from a remote computer (e.g., a server) to a requesting computer (e.g., a client) by way of data signals via a communication link (e.g., a modem or network connection).

In some embodiments, device 800 comprises temperature measurement circuitries 840, e.g., for measuring temperature of various components of device 800. In an example, temperature measurement circuitries 840 may be embedded, or coupled or attached to various components, whose temperature are to be measured and monitored. For example, temperature measurement circuitries 840 may measure temperature of (or within) one or more of cores 808a, 808b, 808c, voltage regulator 814, memory 830, a mother-board of SOC 801, and/or any appropriate component of device 800.

In some embodiments, device 800 comprises power measurement circuitries 842, e.g., for measuring power consumed by one or more components of the device 800. In an example, in addition to, or instead of, measuring power, the power measurement circuitries 842 may measure voltage and/or current. In an example, the power measurement circuitries 842 may be embedded, or coupled or attached to various components, whose power, voltage, and/or current consumption are to be measured and monitored. For example, power measurement circuitries 842 may measure power, current and/or voltage supplied by one or more voltage regulators 814, power supplied to SOC 801, power supplied to device 800, power consumed by processor 804 (or any other component) of device 800, etc.

In some embodiments, device 800 comprises one or more voltage regulator circuitries, generally referred to as voltage regulator (VR) 814. VR 814 generates signals at appropriate voltage levels, which may be supplied to operate any appropriate components of the device 800. Merely as an example, VR 814 is illustrated to be supplying signals to processor 804 of device 800. In some embodiments, VR 814 receives one or more Voltage Identification (VID) signals, and generates the voltage signal at an appropriate level, based on the VID signals. Various type of VRs may be utilized for the VR 814. For example, VR 814 may include a "buck" VR, "boost" VR, a combination of buck and boost VRs, low dropout (LDO) regulators, switching DC-DC regulators, etc. Buck VR is generally used in power delivery applications in which an input voltage needs to be transformed to an output voltage in a ratio that is smaller than unity. Boost VR is generally used in power delivery applications in which an input voltage needs to be transformed to an output voltage in a ratio that is larger than unity. In some embodiments, each processor core has its own VR which is controlled by PCU 810a/b and/or PMIC 812. In some embodiments, each core has a network of distributed LDOs to provide efficient control for power management. The LDOs can be digital, analog, or a combination of digital or analog LDOs.

In some embodiments, device 800 comprises one or more clock generator circuitries, generally referred to as clock generator 816. Clock generator 816 generates clock signals at appropriate frequency levels, which may be supplied to any appropriate components of device 800. Merely as an example, clock generator 816 is illustrated to be supplying clock signals to processor 804 of device 800. In some embodiments, clock generator 816 receives one or more Frequency Identification (FID) signals, and generates the clock signals at an appropriate frequency, based on the FID signals.

In some embodiments, device 800 comprises battery 818 supplying power to various components of device 800. Merely as an example, battery 818 is illustrated to be supplying power to processor 804. Although not illustrated in the figures, device 800 may comprise a charging circuitry, e.g., to recharge the battery, based on Alternating Current (AC) power supply received from an AC adapter.

In some embodiments, device 800 comprises Power Control Unit (PCU) 810 (also referred to as Power Management Unit (PMU), Power Controller, etc.). In an example, some sections of PCU 810 may be implemented by one or more processing cores 808, and these sections of PCU 810 are symbolically illustrated using a dotted box and labelled PCU 810a. In an example, some other sections of PCU 810 may be implemented outside the processing cores 808, and these sections of PCU 810 are symbolically illustrated using a dotted box and labelled as PCU 810b. PCU 810 may implement various power management operations for device 800. PCU 810 may include hardware interfaces, hardware circuitries, connectors, registers, etc., as well as software components (e.g., drivers, protocol stacks), to implement various power management operations for device 800.

In some embodiments, device 800 comprises Power Management Integrated Circuit (PMIC) 812, e.g., to implement various power management operations for device 800. In some embodiments, PMIC 812 is a Reconfigurable Power Management ICs (RPMICs) and/or an IMVP (Intel^{®} Mobile Voltage Positioning). In an example, the PMIC is within an IC chip separate from processor 804. The may implement various power management operations for device 800. PMIC 812 may include hardware interfaces, hardware circuitries, connectors, registers, etc., as well as software components (e.g., drivers, protocol stacks), to implement various power management operations for device 800.

In an example, device 800 comprises one or both PCU 810 or PMIC 812. In an example, any one of PCU 810 or PMIC 812 may be absent in device 800, and hence, these components are illustrated using dotted lines.

Various power management operations of device 800 may be performed by PCU 810, by PMIC 812, or by a combination of PCU 810 and PMIC 812. For example, PCU 810 and/or PMIC 812 may select a power state (e.g., P-state) for various components of device 800. For example, PCU 810 and/or PMIC 812 may select a power state (e.g., in accordance with the ACPI (Advanced Configuration and Power Interface) specification) for various components of device 800. Merely as an example, PCU 810 and/or PMIC 812 may cause various components of the device 800 to transition to a sleep state, to an active state, to an appropriate C state (e.g., C0 state, or another appropriate C state, in accordance with the ACPI specification), etc. In an example, PCU 810 and/or PMIC 812 may control a voltage output by VR 814 and/or a frequency of a clock signal output by the clock generator, e.g., by outputting the VID signal and/or the FID signal, respectively. In an example, PCU 810 and/or PMIC 812 may control battery power usage, charging of battery 818, and features related to power saving operation.

The clock generator 816 can comprise a phase locked loop (PLL), frequency locked loop (FLL), or any suitable clock source. In some embodiments, each core of processor 804 has its own clock source. As such, each core can operate at a frequency independent of the frequency of operation of the other core. In some embodiments, PCU 810 and/or PMIC 812 performs adaptive or dynamic frequency scaling or adjustment. For example, clock frequency of a processor core can be increased if the core is not operating at its maximum power consumption threshold or limit. In some embodiments, PCU 810 and/or PMIC 812 determines the operating condition of each core of a processor, and opportunistically adjusts frequency and/or power supply voltage of that core without the core clocking source (e.g., PLL of that core) losing lock when the PCU 810 and/or PMIC 812 determines that the core is operating below a target performance level. For example, if a core is drawing current from a power supply rail less than a total current allocated for that core or processor 804, then PCU 810 and/or PMIC 812 can temporarily increase the power draw for that core or processor 804 (e.g., by increasing clock frequency and/or power supply voltage level) so that the core or processor 804 can perform at a higher performance level. As such, voltage and/or frequency can be increased temporality for processor 804 without violating product reliability.

In an example, PCU 810 and/or PMIC 812 may perform power management operations, e.g., based at least in part on receiving measurements from power measurement circuitries 842, temperature measurement circuitries 840, charge level of battery 818, and/or any other appropriate information that may be used for power management. To that end, PMIC 812 is communicatively coupled to one or more sensors to sense/detect various values/variations in one or more factors having an effect on power/thermal behavior of the system/platform. Examples of the one or more factors include electrical current, voltage droop, temperature, operating frequency, operating voltage, power consumption, inter-core communication activity, etc. One or more of these sensors may be provided in physical proximity (and/or thermal contact/coupling) with one or more components or logic/IP blocks of a computing system. Additionally, sensor(s) may be directly coupled to PCU 810 and/or PMIC 812 in at least one embodiment to allow PCU 810 and/or PMIC 812 to manage processor core energy at least in part based on value(s) detected by one or more of the sensors.

Also illustrated is an example software stack of device 800 (although not all elements of the software stack are illustrated). Merely as an example, processors 804 may execute application programs 850, Operating System 852, one or more Power Management (PM) specific application programs (e.g., generically referred to as PM applications 858), and/or the like. PM applications 858 may also be executed by the PCU 810 and/or PMIC 812. OS 852 may also include one or more PM applications 856a, 856b, 856c. The OS 852 may also include various drivers 854a, 854b, 854c, etc., some of which may be specific for power management purposes. In some embodiments, device 800 may further comprise a Basic Input/Output System (BIOS) 820. BIOS 820 may communicate with OS 852 (e.g., via one or more drivers 854), communicate with processors 804, etc.

For example, one or more of PM applications 858, 856, drivers 854, BIOS 820, etc. may be used to implement power management specific tasks, e.g., to control voltage and/or frequency of various components of device 800, to control wake-up state, sleep state, and/or any other appropriate power state of various components of device 800, control battery power usage, charging of the battery 818, features related to power saving operation, etc.

In an illustrative scenario according to one embodiment, device 800 further comprises, or is to be coupled to, another display device - e.g., wherein devices 829 include the additional display device and, for example, one or more human interface devices by which a user is to interact with (or otherwise exhibit interest in) any of multiple display devices. During operation of device 800, OS 852 monitors user behavior by evaluating the output by the one or more human interface devices - e.g., where such evaluating is performed by PM applications 856 of OS 852. Based on the evaluating, PM applications 858 (for example) receive from OS 852 an indication that - according to a predefined criteria - one display device is of insufficient user interest while the user concurrently exhibits interest in another display device that is included in, or coupled to, device 800.

By way of illustration and not limitation, PM applications 858 (OS 852) accesses the one or more criteria - e.g., from memory 830 - to evaluate user interest as indicated by the output of the one or more human interface devices. At a given time, PM applications 856, PM applications 858, power measurement circuitries 842 and/or other power management logic detects a condition which includes an expiration of some threshold period of time since a more recent interaction by the user with a given display device. Based on the condition, the power management logic signals a dormant display to transition to a power state that results in a reduced consumption of power - e.g., wherein another display (in which the user is exhibiting interest) is maintained in a current power state notwithstanding the insufficient user interest in the dormant display.

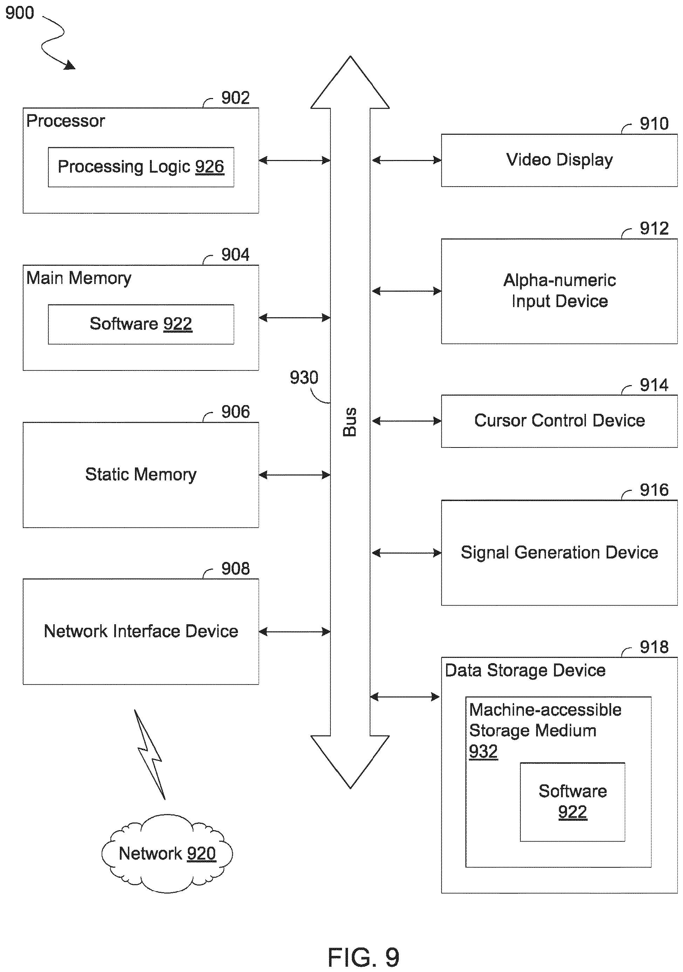

FIG. 9 illustrates a diagrammatic representation of a machine in the exemplary form of a computer system 900 within which a set of instructions, for causing the machine to perform any one or more of the methodologies described herein, may be executed. In alternative embodiments, the machine may be connected (e.g., networked) to other machines in a Local Area Network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines (e.g., computers) that individually or jointly execute a set (or multiple sets) of instructions to perform any one or more of the methodologies described herein.

The exemplary computer system 900 includes a processor 902, a main memory 904 (e.g., read-only memory (ROM), flash memory, dynamic random access memory (DRAM) such as synchronous DRAM (SDRAM) or Rambus DRAM (RDRAM), etc.), a static memory 906 (e.g., flash memory, static random access memory (SRAM), etc.), and a secondary memory 918 (e.g., a data storage device), which communicate with each other via a bus 930.

Processor 902 represents one or more general-purpose processing devices such as a microprocessor, central processing unit, or the like. More particularly, the processor 902 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 902 may also be one or more special-purpose processing devices such as an application specific integrated circuit (ASIC), a field programmable gate array (FPGA), a digital signal processor (DSP), network processor, or the like. Processor 902 is configured to execute the processing logic 926 for performing the operations described herein.

The computer system 900 may further include a network interface device 908. The computer system 900 also may include a video display unit 910 (e.g., a liquid crystal display (LCD), a light emitting diode display (LED), or a cathode ray tube (CRT)), an alphanumeric input device 912 (e.g., a keyboard), a cursor control device 914 (e.g., a mouse), and a signal generation device 916 (e.g., a speaker).

The secondary memory 918 may include a machine-accessible storage medium (or more specifically a computer-readable storage medium) 932 on which is stored one or more sets of instructions (e.g., software 922) embodying any one or more of the methodologies or functions described herein. The software 922 may also reside, completely or at least partially, within the main memory 904 and/or within the processor 902 during execution thereof by the computer system 900, the main memory 904 and the processor 902 also constituting machine-readable storage media. The software 922 may further be transmitted or received over a network 920 via the network interface device 908.

While the machine-accessible storage medium 932 is shown in an exemplary embodiment to be a single medium, the term "machine-readable storage medium" should be taken to include a single medium or multiple media (e.g., a centralized or distributed database, and/or associated caches and servers) that store the one or more sets of instructions. The term "machine-readable storage medium" shall also be taken to include any medium that is capable of storing or encoding a set of instructions for execution by the machine and that cause the machine to perform any of one or more embodiments. The term "machine-readable storage medium" shall accordingly be taken to include, but not be limited to, solid-state memories, and optical and magnetic media.

Techniques and architectures for managing power consumption of a display device are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

Besides what is described herein, various modifications may be made to the disclosed embodiments and implementations thereof without departing from their scope. Therefore, the illustrations and examples herein should be construed in an illustrative, and not a restrictive sense. The scope of the invention should be measured solely by reference to the claims that follow.

## Claims

1. A method performed by a device comprising:
identifying (214) a condition wherein an insufficiency of interest by a user in a first display device coincides with an indication of interest by the user in a second display device, wherein the condition is identified while multiple display devices, comprising the first display device and the second display device, each display respective images based on an execution, by a processor of the device, of an operating system, OS; and
based on the condition, automatically reducing (216) a consumption of power by the first display device while a power state of the second display device is maintained;
wherein the method further comprises, based on the condition, suspending operations to calculate image data to be communicated to the first display device and **characterized in that** the method further comprises, based on the condition, suspending a communication of updates to indicate to the OS a status of the first display device.

2. The method of claim 1, wherein the condition is identified while the multiple display devices each display a different respective portion of a graphical user interface.

3. The method of either of claim 1 or 2, further comprising detecting an output by one or more human interface devices, wherein the output is communicated while the multiple display devices each display the respective images, and wherein identifying the condition comprises performing an evaluation of the output based on one or more predetermined criteria which indicate a minimum threshold utilization of the first display device.

4. The method of any of claims 1 through 3, wherein automatically reducing the consumption of power comprises one of reducing a refresh rate of the first display device, or dimming a backlight of the first display device.

5. The method of any of claims 1 through 4, wherein
one of the first display device or the second display device is a display device of one of a laptop computer, a tablet computer or an all-in-one computer; and
the one of the laptop computer, the tablet computer or the all-in-one computer further comprises a memory to store a state of the OS and the processor to execute the OS.

6. The method of claim 5, wherein the second display device is a display device of the one of the laptop computer, the tablet computer or the all-in-one computer.

7. The method of any of claims 1 through 6, further comprising:
after reducing the consumption of power by the first display device, detecting that a duration of the insufficiency of interest by the user in the first display device exceeds a threshold period of time; and
based on the detecting, further reducing the consumption of power by the first display device.

8. A device comprising:
a controller unit configured to identify a condition wherein an insufficiency of interest by a user in a first display device coincides with an indication of interest by the user in a second display device, wherein the condition is identified while multiple display devices, comprising the first display device and the second display device, each display respective images based on an execution, by a processor of the device, of an operating system, OS; and
a power management unit coupled to the controller unit, wherein, based on the condition, the power management unit is configured to automatically reduce a consumption of power by the first display device while a power state of the second display device is maintained;
wherein the controller unit is further configured, based on the condition, to suspend a calculation of image data to be communicated to the first display device and **characterized in that** the controller unit is further configured, based on the condition, to suspend a communication of updates to indicate to the OS a status of the first display device.

9. The device of claim 8, wherein the condition is identified while the multiple display devices are each configured to display a different respective portion of a graphical user interface.

10. The device of either of claim 8 or 9, wherein the controller unit is further configured to detect an output by one or more human interface devices, wherein the output is communicated while the multiple display devices each display the respective images, and wherein the controller unit being configured to identify the condition comprises the controller unit being configured to perform an evaluation of the output based on one or more predetermined criteria which indicate a minimum threshold utilization of the first display device.

11. The device of any of claims 8 through 10, wherein the power management unit being configured to to automatically reduce the consumption of power comprises one of the power management unit being configured to reduce a refresh rate of the first display device, or the power management unit being configured to dim a backlight of the first display device.

12. The device of any of claims 8 through 11, wherein one of a laptop computer, a tablet computer or an all-in-one computer comprises:
one of the first display device or the second display device;
a memory to store a state of the OS; and
the processor to execute the OS.

13. A computer program product having instructions stored thereon that when executed by the device of claim 8, carry out the method of any of claims 1 through 7.

## Patentansprüche

1. Verfahren, das durch eine Vorrichtung durchgeführt wird, umfassend:
Identifizieren (214) einer Bedingung, bei der ein Mangel an Interesse durch einen Benutzer in einer ersten Anzeigevorrichtung mit einem Anzeichen von Interesse durch den Benutzer in einer zweiten Anzeigevorrichtung zusammenfällt, wobei die Bedingung identifiziert wird, während mehrere Anzeigevorrichtungen, die die erste Anzeigevorrichtung und die zweite Anzeigevorrichtung umfassen, jeweils jeweilige Bilder basierend auf einer Ausführung eines Betriebssystems, OS, durch einen Prozessor der Vorrichtung anzeigen; und
basierend auf der Bedingung, automatisches Reduzieren (216) eines Leistungsverbrauchs durch die erste Anzeigevorrichtung, während ein Leistungszustand der zweiten Anzeigevorrichtung beibehalten wird;
wobei das Verfahren ferner, basierend auf der Bedingung, Unterbrechen von Operationen zum Berechnen von an die erste Anzeigevorrichtung zu kommunizierenden Bilddaten umfasst, und **dadurch gekennzeichnet, dass** das Verfahren ferner, basierend auf der Bedingung, Unterbrechen einer Kommunikation von Aktualisierungen, um dem OS einen Status der ersten Anzeigevorrichtung anzugeben, umfasst.

2. Verfahren nach Anspruch 1, wobei die Bedingung identifiziert wird, während die mehreren Anzeigevorrichtungen jeweils einen unterschiedlichen jeweiligen Abschnitt einer grafischen Benutzerschnittstelle anzeigen.

3. Verfahren nach Anspruch 1 oder 2, ferner umfassend Detektieren einer Ausgabe durch eine oder mehrere Mensch-Maschine-Schnittstellenvorrichtungen, wobei die Ausgabe kommuniziert wird, während die mehreren Anzeigevorrichtungen jeweils die jeweiligen Bilder anzeigen, und wobei das Identifizieren der Bedingung Durchführen einer Bewertung der Ausgabe basierend auf einem oder mehreren vorbestimmten Kriterien, die eine minimale Schwellenauslastung der ersten Anzeigevorrichtung angeben, umfasst.

4. Verfahren nach einem der Ansprüche 1 bis 3, wobei das automatische Reduzieren des Leistungsverbrauchs eines von Reduzieren einer Bildwiederholrate der ersten Anzeigevorrichtung oder Dimmen einer Hintergrundbeleuchtung der ersten Anzeigevorrichtung umfasst.

5. Verfahren nach einem der Ansprüche 1 bis 4, wobei eine der ersten Anzeigevorrichtung oder der zweiten Anzeigevorrichtung eine Anzeigevorrichtung von einem eines Laptop-Computers, eines Tablet-Computers oder eines All-in-One-Computers ist; und
der eine des Laptop-Computers, des Tablet-Computers oder des All-in-One-Computers ferner einen Speicher zum Speichern eines Zustands des OS und den Prozessor zum Ausführen des OS umfasst.

6. Verfahren nach Anspruch 5, wobei die zweite Anzeigevorrichtung eine Anzeigevorrichtung des einen des Laptop-Computers, des Tablet-Computers oder des All-in-One-Computers ist.

7. Verfahren nach einem der Ansprüche 1 bis 6, ferner umfassend:
nach dem Reduzieren des Leistungsverbrauchs durch die erste Anzeigevorrichtung, Detektieren, dass eine Dauer des Mangels an Interesse durch den Benutzer in der ersten Anzeigevorrichtung eine Schwellenzeitperiode überschreitet; und
basierend auf dem Detektieren, weiteres Reduzieren des Leistungsverbrauchs durch die erste Anzeigevorrichtung.

8. Vorrichtung, umfassend:
eine Steuereinheit, die dazu ausgelegt ist, eine Bedingung zu identifizieren, bei der ein Mangel an Interesse durch einen Benutzer in einer ersten Anzeigevorrichtung mit einem Anzeichen von Interesse durch den Benutzer in einer zweiten Anzeigevorrichtung zusammenfällt, wobei die Bedingung identifiziert wird, während mehrere Anzeigevorrichtungen, die die erste Anzeigevorrichtung und die zweite Anzeigevorrichtung umfassen, jeweils jeweilige Bilder basierend auf einer Ausführung eines Betriebssystems, OS, durch einen Prozessor der Vorrichtung anzeigen; und
eine Leistungsverwaltungseinheit, die mit der Steuereinheit gekoppelt ist, wobei, basierend auf der Bedingung, die Leistungsverwaltungseinheit dazu ausgelegt ist, einen Leistungsverbrauch durch die erste Anzeigevorrichtung automatisch zu reduzieren, während ein Leistungszustand der zweiten Anzeigevorrichtung beibehalten wird;
wobei die Steuereinheit ferner dazu ausgelegt ist, basierend auf der Bedingung eine Berechnung von an die erste Anzeigevorrichtung zu kommunizierenden Bilddaten zu unterbrechen, und **dadurch gekennzeichnet, dass** die Steuereinheit ferner dazu ausgelegt ist, basierend auf der Bedingung eine Kommunikation von Aktualisierungen zu unterbrechen, um dem OS einen Status der ersten Anzeigevorrichtung anzugeben.

9. Vorrichtung nach Anspruch 8, wobei die Bedingung identifiziert wird, während die mehreren Anzeigevorrichtungen jeweils dazu ausgelegt sind, einen unterschiedlichen jeweiligen Abschnitt einer grafischen Benutzerschnittstelle anzuzeigen.

10. Vorrichtung nach Anspruch 8 oder 9, wobei die Steuereinheit ferner dazu ausgelegt ist, eine Ausgabe durch eine oder mehrere Mensch-Maschine-Schnittstellenvorrichtungen zu detektieren, wobei die Ausgabe kommuniziert wird, während die mehreren Anzeigevorrichtungen jeweils die jeweiligen Bilder anzeigen, und wobei, dass die Steuereinheit dazu ausgelegt ist, die Bedingung zu identifizieren, umfasst, dass die Steuereinheit dazu ausgelegt ist, eine Bewertung der Ausgabe basierend auf einem oder mehreren vorbestimmten Kriterien, die eine minimale Schwellenauslastung der ersten Anzeigevorrichtung angeben, durchzuführen.

11. Vorrichtung nach einem der Ansprüche 8 bis 10, wobei, dass die Leistungsverwaltungseinheit dazu ausgelegt ist, den Leistungsverbrauch automatisch zu reduzieren, entweder umfasst, dass die Leistungsverwaltungseinheit dazu ausgelegt ist, eine Bildwiederholrate der ersten Anzeigevorrichtung zu reduzieren, oder dass die Leistungsverwaltungseinheit dazu ausgelegt ist, eine Hintergrundbeleuchtung der ersten Anzeigevorrichtung zu dimmen.

12. Vorrichtung nach einem der Ansprüche 8 bis 11, wobei eines von einem Laptop-Computer, einem Tablet-Computer oder einem All-in-One-Computer Folgendes umfasst:
eine der ersten Anzeigevorrichtung oder der zweiten Anzeigevorrichtung;
einen Speicher zum Speichern eines Zustands des OS; und den Prozessor zum Ausführen des OS.

13. Computerprogrammprodukt mit darauf gespeicherten Anweisungen, die, wenn sie durch die Vorrichtung nach Anspruch 8 ausgeführt werden, das Verfahren nach einem der Ansprüche 1 bis 7 ausführen.

## Revendications

1. Procédé réalisé par un dispositif comprenant :
l'identification (214) d'une condition dans laquelle une insuffisance d'intérêt par un utilisateur pour un premier dispositif d'affichage coïncide avec une indication d'intérêt par l'utilisateur pour un second dispositif d'affichage, la condition étant identifiée tandis que de multiples dispositifs d'affichage, comprenant le premier dispositif d'affichage et le second dispositif d'affichage, affichent chacun des images respectives sur la base d'une exécution, par un processeur du dispositif, d'un système d'exploitation, OS ; et
sur la base de la condition, la réduction (216) automatique d'une consommation de puissance par le premier dispositif d'affichage tandis qu'un état de puissance du second dispositif d'affichage est maintenu ; le procédé comprenant en outre, sur la base de la condition, la suspension d'opérations pour calculer des données d'image à communiquer au premier dispositif d'affichage et **caractérisé en ce que** le procédé comprend en outre, sur la base de la condition, la suspension d'une communication de mises à jour pour indiquer à l'OS un statut du premier dispositif d'affichage.

2. Procédé selon la revendication 1, dans lequel la condition est identifiée tandis que les multiples dispositifs d'affichage affichent chacun une partie respective différente d'une interface utilisateur graphique.

3. Procédé selon la revendication 1 ou la revendication 2, comprenant en outre la détection d'une sortie par un ou plusieurs dispositifs d'interface humaine, la sortie étant communiquée tandis que les multiples dispositifs d'affichage affichent chacun les images respectives, et dans lequel l'identification de la condition comprend la réalisation d'une évaluation de la sortie sur la base d'un ou de plusieurs critères prédéterminés qui indiquent une utilisation seuil minimum du premier dispositif d'affichage.

4. Procédé selon l'une quelconque des revendications 1 à 3, dans lequel la réduction automatique de la consommation de puissance comprend un élément parmi la réduction d'une fréquence de rafraîchissement du premier dispositif d'affichage, ou la diminution d'un rétroéclairage du premier dispositif d'affichage.

5. Procédé selon l'une quelconque des revendications 1 à 4, dans lequel
l'un du premier dispositif d'affichage ou du second dispositif d'affichage est un dispositif d'affichage parmi un ordinateur portable, une tablette électronique ou un ordinateur tout-en-un ; et
l'un(e) de l'ordinateur portable, de la tablette électronique ou l'ordinateur tout-en-un comprend en outre une mémoire pour stocker un état de l'OS et le processeur pour exécuter l'OS.

6. Procédé selon la revendication 5, dans lequel le second dispositif d'affichage est un dispositif d'affichage parmi l'ordinateur portable, la tablette électronique ou l'ordinateur tout-en-un.

7. Procédé selon l'une quelconque des revendications 1 à 6, comprenant en outre :
après réduction de la consommation de puissance par le premier dispositif d'affichage, la détection qu'une durée de l'insuffisance d'intérêt par l'utilisateur pour le premier dispositif d'affichage dépasse une période de temps seuil ; et
sur la base de la détection, la réduction plus avant de la consommation de puissance par le premier dispositif d'affichage.

8. Dispositif comprenant :
une unité de commande configurée pour identifier une condition dans laquelle une insuffisance d'intérêt par un utilisateur pour un premier dispositif d'affichage coïncide avec une indication d'intérêt par l'utilisateur pour un second dispositif d'affichage, la condition étant identifiée tandis que de multiples dispositifs d'affichage, comprenant le premier dispositif d'affichage et le second dispositif d'affichage, affichent chacun des images respectives sur la base d'une exécution, par un processeur du dispositif, d'un système d'exploitation, OS ; et
une unité de gestion de puissance couplée à l'unité de commande, dans laquelle, sur la base de la condition, l'unité de gestion de puissance est configurée pour réduire automatiquement une consommation de puissance par le premier dispositif d'affichage tandis qu'un état de puissance du second dispositif d'affichage est maintenu ;
dans lequel l'unité de commande est en outre configurée, sur la base de la condition, pour suspendre un calcul de données d'image à communiquer au premier dispositif d'affichage et **caractérisé en ce que** l'unité de commande est en outre configurée, sur la base de la condition, pour suspendre une communication de mises à jour afin d'indiquer à l'OS un statut du premier dispositif d'affichage.

9. Dispositif selon la revendication 8, dans lequel la condition est identifiée tandis que les multiples dispositifs d'affichage sont chacun configurés pour afficher une partie respective différente d'une interface utilisateur graphique.

10. Dispositif selon la revendication 8 ou la revendication 9, dans lequel l'unité de commande est en outre configurée pour détecter une sortie par un ou plusieurs dispositifs d'interface humaine, la sortie étant communiquée tandis que les multiples dispositifs d'affichage affichent chacun les images respectives, et dans lequel le fait que l'unité de commande est configurée pour identifier la condition comprend le fait que l'unité de commande est configurée pour réaliser une évaluation de la sortie sur la base d'un ou de plusieurs critères prédéterminés qui indiquent une utilisation seuil minimum du premier dispositif d'affichage.

11. Dispositif selon l'une quelconque des revendications 8 à 10, dans lequel le fait que l'unité de gestion de puissance est configurée pour réduire automatiquement la consommation de puissance comprend soit le fait que l'unité de gestion de puissance est configurée pour réduire une fréquence de rafraîchissement du premier dispositif d'affichage, soit le fait que l'unité de gestion de puissance est configurée pour diminuer un rétroéclairage du premier dispositif d'affichage.

12. Dispositif selon l'une quelconque des revendications 8 à 11, dans lequel l'un(e) d'un ordinateur portable, d'une tablette électronique ou d'un ordinateur tout-en-un comprend :
l'un du premier dispositif d'affichage ou du second dispositif d'affichage ;
une mémoire pour stocker un état de l'OS ; et
le processeur pour exécuter l'OS.

13. Produit de programme informatique ayant des instructions stockées sur lui qui, lorsqu'elles sont exécutées par le dispositif selon la revendication 8, effectuent le procédé selon l'une quelconque des revendications 1 à 7.
